# EUROPÄISCHE PATENTSCHRIFT

(11) **EP 2 551 292 B1**
(45) Veröffentlichungstag und Bekanntmachung des Hinweises auf die Patenterteilung: **14.06.2017**
(21) Anmeldenummer: 11176008.8
(22) Anmeldetag: 29.07.2011
(51) Int. Cl.: B01J 19/30, C08J 7/12

(54) **Füllkörper einer Füllkörpersäule und Verfahren zur Behandlung des Füllkörpers**
Packing element for packing column and method for processing the packing element
Elément de remplissage pour colonne garnie et procédé de traitement de l'élément de remplissage

(43) Veröffentlichungstag der Anmeldung: 30.01.2013
(73) Patentinhaber: Air Liquide Deutschland GmbH, 40235 Düsseldorf (DE); L'AIR LIQUIDE, Société Anonyme pour l'Etude et l'Exploitation des Procédés Georges Claude, 75007 Paris (FR)
(72) Erfinder: van Bonn, Rolf, 47269 Duisburg (DE)
(74) Vertreter: Heine, Christian Klaus

(56) Entgegenhaltungen:
- EP-A2- 0 531 255
- GB-A- 860 689
- US-A- 5 725 810
- US-A1- 2009 275 785
- US-B1- 6 241 222
- DU TOIT F J ET AL: "The effect of surface fluorination on the wettability of high density polyethylene", JOURNAL OF FLUORINE CHEMISTRY, ELSEVIER, NL, Bd. 74, Nr. 1, 1. September 1995 (1995-09-01), Seiten 43-48, XP004020509, ISSN: 0022-1139, DOI: 10.1016/0022-1139(94)03218-O

## Beschreibung

Die vorliegende Erfindung betrifft ein Verfahren zur Behandlung eines Bestandteils einer Füllkörpersäule, insbesondere eines Füllkörpers, und einen Bestandteil einer Füllkörpersäule mit einem Bereich aus Kunststoff, insbesondere einen Füllkörper. Solche Füllkörpersäulen werden auch als Trennsäulen bezeichnet.

Füllkörpersäulen sind beispielsweise aus der GB 860,869 B bekannt, entsprechende Füllkörper beispielsweise aus EP 0 531 255 A. In chemischen Verfahren werden Füllkörpersäulen, die auch Trennsäulen genannt werden, eingesetzt, um mindestens zwei Ausgangsstoffe miteinander in Kontakt zu bringen. Solche Füllkörpersäulen werden zur Abtrennung einer Gaskomponente aus einem Gasgemisch eingesetzt, wie es beispielsweise bei der Entfernung von Schadstoffen aus der Luft geschieht. Die Luft als erster Ausgangsstoff wird hierbei mit einer Waschflüssigkeit als zweitem Ausgangsstoff in Kontakt gebracht. Die Luft wird in einen als Sumpf bezeichneten unteren Bereich in die Füllkörpersäule eingeführt. Die Waschflüssigkeit wird in einem oberen Bereich der Füllkörpersäule eingeführt. Die absinkende Flüssigkeit kommt dabei mit der aufsteigenden Luft in Kontakt, wobei die Waschflüssigkeit Schadstoffe der Luft aufnimmt. Die gereinigte Luft kann aus einem oberen Bereich der Füllkörpersäule entnommen werden.

Um den Stoff- oder Wärmeaustausch bei einem solchen Prozess zu verbessern, werden die Füllkörpersäulen mit Füllkörpern befüllt. Die Füllkörper dienen der Vergrößerung der Wirkungsoberfläche, an der die Luft beziehungsweise der erste Ausgangsstoff mit der Waschflüssigkeit beziehungsweise dem zweiten Ausgangsstoff miteinander reagieren können. Je größer die Kontaktfläche für den ersten Ausgangsstoff und den zweiten Ausgangsstoff an dem Füllkörper ist, umso höher ist der Wirkungsgrad der Füllkörpersäule.

Die Füllkörper werden daher so gestaltet, dass sie eine möglichst große Oberfläche aufweisen, um einen optimalen Stoffaustausch zu ermöglichen. Ein Maß für die Stoffaustauscheigenschaften der Füllkörper ist daher deren Verhältnis von Oberfläche zu Volumen. Dieses Verhältnis kann beispielsweise im Bereich von 350 m²/m³ [Quadratmeter pro Kubikmeter] liegen.

Füllkörper aus Kunststoff lassen sich mit wässrigen Lösungen nicht vollständig benetzen. Da nur an der benetzten Oberfläche des Füllkörpers ein Stoffaustausch stattfindet, ist der Wirkungsgrad der Füllkörpersäule mit solchen Füllkörpern erheblich eingeschränkt.

Es ist daher Aufgabe der vorliegenden Erfindung, die mit Bezug zum Stand der Technik geschilderten technischen Probleme zumindest teilweise zu lösen. Insbesondere soll ein Verfahren zur Behandlung mindestens eines Bestandteils einer Füllkörpersäule und ein Bestandteil einer Füllkörpersäule angegeben werden, mit welchem die Effektivität der Füllkörpersäule erhöht werden kann.

Gelöst werden diese Aufgaben mit einem Verfahren und einem Bestandteil einer Füllkörpersäule mit den Merkmalen der unabhängigen Ansprüche. Vorteilhafte Weiterbildungen sind durch die Merkmale in den abhängigen Ansprüchen und in der Beschreibung angegeben, die beliebig, in technologisch sinnvoller Weise, miteinander kombiniert werden können.

Gelöst wird diese Aufgabe durch ein Verfahren zur Behandlung mindestens eines Bestandteils einer Füllkörpersäule mit einem Bereich aus Kunststoff, wobei der Bereich mit einer Bereichsoberfläche zumindest einen Teil der Oberfläche des Bestandteils bildet, bei dem zumindest ein Teil der Kunststoff aufweisenden Oberfläche für einen Behandlungszeitraum in einer Behandlungskammer mit einem Behandlungsgas in Kontakt gebracht wird, wobei das Behandlungsgas Fluor umfasst.

Eine Füllkörpersäule ist auch als Trennsäule, Kolonne oder Füllkörperkolonne bekannt, in der bevorzugt ein flüssiger Ausgangsstoff und ein gasförmiger Ausgangsstoff miteinander in Kontakt gebracht werden. Füllkörpersäulen werden aber auch in der Rektifikation eingesetzt. Beispielsweise werden solche Füllkörpersäulen bei der Reinigung von Luft eingesetzt. Unter einem Bestandteil der Füllkörpersäule sind die Elemente der Füllkörpersäule wie Böden, Tropfenabscheider oder Inertkugeln zu verstehen. Um die Oberfläche zu vergrößern, an der der flüssige Ausgangsstoff und der gasförmige Ausgangsstoff miteinander in Kontakt stehen, ist eine solche Füllkörpersäule mit Füllkörpern befüllt. Besonders bevorzugt ist der Bestandteil daher ein Füllkörper selbst. In diesem Zusammenhang ist bevorzugt, dass der Füllkörper aus einem Kunststoff gebildet ist und die gesamte Oberfläche des Füllkörpers mit dem Behandlungsgas in Kontakt gebracht wird.

Es kann aber auch nur ein Teil der Oberfläche des Bestandteils durch einen Kunststoff ausgebildet sein, während der andere Teil aus einem anderen Stoff ausgebildet ist. Es ist aber entscheidend, dass zumindest ein Teil des Kunststoffteils des Bestandteils mit dem Behandlungsgas in Kontakt gebracht wird. Der Bestandteil beziehungsweise der Füllkörper werden dazu in einer Behandlungskammer für einen Behandlungszeitraum mit dem Behandlungsgas beaufschlagt. Die Behandlungskammer ist bevorzugt gasdicht abschließbar und zur Aufnahme des Bestandteils der Füllkörpersäule geeignet. Somit ist gewährleistet, dass der Bestandteil mit einem in seiner Zusammensetzung bestimmbarem Behandlungsgas in Kontakt gebracht werden kann. Erfindungsgemäß umfasst das Behandlungsgas Fluor, bevorzugt elementares Fluor (F₂). Neben Fluor umfasst das Behandlungsgas bevorzugt mindestens ein Inertgas wie Stickstoff (N₂) und/oder Argon (Ar).

Bei diesem Verfahren ersetzen durch die Reaktion mit Fluor Fluoratome Wasserstoffatome auf der Oberfläche oder in einer oberflächennahen Schicht des Kunststoffs. Dadurch wird erreicht, dass der Teil der Kunststoff aufweisenden Oberfläche des Bestandteils der Füllkörpersäule eine verbesserte Benetzbarkeit erhält, der bei entsprechender Behandlung sogar vollständig benetzbar ist. Durch das erfindungsgemäße Verfahren wird nur eine Schicht angrenzend an die Kunststoffoberfläche mit dem Fluor umfassenden Behandlungsgas behandelt, so dass nur diese an die Oberfläche angrenzende Schicht Fluor in gebundener Form aufweist.

Durch das erfindungsgemäße Verfahren wird die Oberflächenspannung eines Kunststoffs von ursprünglich 30 mN/m [Millinewton pro Meter] bis 40 mN/m auf 50 mN/m bis 70 mN/m erhöht, was eine bessere Benetzbarkeit zur Folge hat.

Vorzugsweise wird die Kunststoff aufweisende Oberfläche für mindestens 30 s [Sekunden] in Kontakt mit dem Behandlungsgas gebracht, bevorzugt mindestens 1 min [Minute], ganz besonders bevorzugt mindestens 5 min. Ein solcher Behandlungszeitraum reicht aus, um eine Schicht an der Oberfläche des Bestandteils mit Fluor zu behandeln, so dass die gewünschte Benetzbarkeit erreicht wird.

Besonders vorteilhaft ist es, wenn das Behandlungsgas mindestens 0,1 Vol.%, bevorzugt mindestens 1 Vol.%, besonders bevorzugt mindestens 5 Vol.-% oder sogar mindestens 10 Vol.-% Fluor umfasst.

Bevorzugt wird die Behandlung bei einer Temperatur durchgeführt, die im Bereich von 20 ° C bis 40 °C liegt. Bevorzugt ist eine Ausgestaltung der Verfahrensführung, bei der sich die Behandlung unmittelbar an den Formgebungsprozess der Füllkörper anschließt. Der Druck der Behandlung wird bevorzugt so gewählt, dass der Druck in der Behandlungskammer unterhalb des Umgebungsdruckes liegt. Bevorzugt umfasst das Behandlungsgas neben Fluor ein Intertgas, insbesondere Stickstoff (N₂), Helium (He) und/oder Argon (Ar). Der Einsatz von Helium als weitere Komponente im Behandlungsgas ist insbesondere dann Bevorzugt, wenn die Fluorierungsreaktion stark exotherm erfolgt, da dann die höhere Wärmeleitfähigkeit des Heliums beispielsweise im Vergleich zu Stickstoff zum Abtransport der entstehenden Reaktionswärme genutzt werden kann. Bevorzugt ist eine, Verfahrensführung, bei der vor Zuführung des Behandlungsgases zur Behandlungskammer diese zumindest einmal evakuiert wird. Gemäß einer weiteren vorteilhaften Ausgestaltung wird die Behandlungskammer nach einem ersten Evakuierungsschritt mit einem Inertgas, insbesondere mit Stickstoff, als Spülgas gespült und das Spülgas vor Zuführung des Behandlungsgases durch Evakuierung aus der Behandlungskammer entfernt.

Einem weiteren Aspekt der Erfindung folgend wird ein Bestandteil einer Füllkörpersäule mit einem Bereich aus Kunststoff vorgeschlagen, der insbesondere nach dem erfindungsgemäßen Verfahren hergestellt wurde. Der Bereich mit einer Bereichsoberfläche bildet zumindest einen Teil der Oberfläche des Bestandteils,
- bei dem zumindest ein Teil der Bereichsoberfläche, insbesondere eine an die Bereichsoberfläche grenzende Schicht, ein Fluorpolymer mit einer polaren Oberfläche ist.

Bevorzugt weist die an die Bereichsoberfläche angrenzende Schicht des Kunststoffs eine Oberflächenspannung von größer als 45 mN/m, insbesondere größer als 50 mN/m, oder sogar größer als 60 mN/m auf.

Das bedeutet also insbesondere, dass nur die an die Bereichsoberfläche grenzende Schicht des Kunststoffs ein Fluorpolymer aufweist, während der restliche Kunststoff des Bereichs, der nicht die Bereichsoberfläche bildet, in seiner ursprünglichen Stoffzusammensetzung erhalten bleibt.

Bevorzugt ist der Bestandteil ein Füllkörper, der aus einem Kunststoff besteht, und dessen Oberfläche ein Fluorpolymer aufweist. Dabei weist insbesondere nicht der gesamte Füllkörper ein Fluorpolymer auf, sondern nur eine oberflächennahe Schicht.

Der Bereich aus Kunststoff bildet somit einen Teil des Bestandteils, der an der Bestandteiloberfläche ausgebildet ist. Genau dieser Teil der Oberfläche des Bestandteils weist in einer an der Oberfläche angrenzenden Schicht ein Fluorpolymer auf.

Unter einem Fluorpolymer wird ein Kunststoff verstanden, der Fluor um-fasst und der bevorzugt durch in Kontaktbringen des Kunststoffs mit einem Fluor umfassenden Gas hergestellt wurde. Im Rahmen dieser Erfindung weisen die Fluorpolymere eine polare Oberfläche auf. Insbesondere handelt es sich um Polymere, bei denen ein Teil des Wasserstoffs in CH₂-Gruppen ausgetauscht wurde, so dass aus diesen CH₂-Gruppen CHF-Gruppen entstehen. Dies wird auch als Polarmodifizierung bezeichnet und entsprechend die Fluorpolymere auch als polarmodifizierte Fluorpolymere.

Vorzugsweise ist der Kunststoff ein Kunststoff der folgenden Gruppe:
- Polyethylen (PE) und
- Polypropylen (PP).

Dementsprechend weist der Bestandteil eine Bereichsoberfläche oder eine oberflächennahe Schicht mit Fluorpolyethylen beziehungsweise Fluorpolypropylen auf.

Die für das erfindungsgemäße Verfahren offenbarten Details und Vorteile lassen sich auf das erfindungsgemäße Bestandteil übertragen und an-wenden und umgekehrt.

Nachfolgend wird anhand der Figuren ein Bestandteil einer Füllkörpersäule in der Form eines Füllkörpers näher beschrieben. Es zeigen schematisch und beispielhaft:

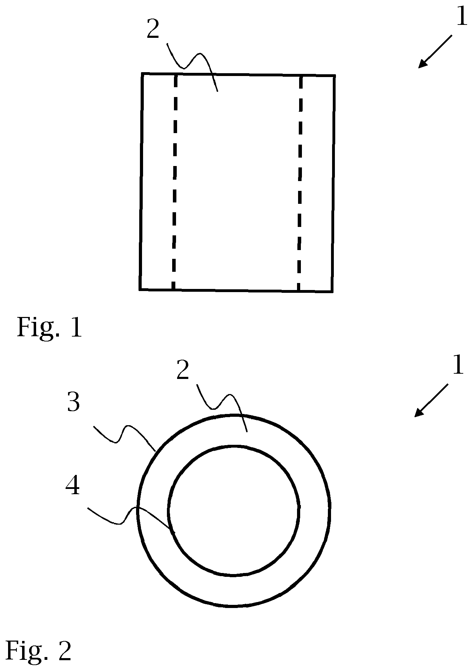

- Fig. 1:: eine Seitenansicht eines Ausführungsbeispiels eines Füllkörpers,
- Fig. 2:: eine Aufsicht auf ein Ausführungsbeispiel eines Füllkörpers.

Die Figuren zeigen einen Füllkörper 1, der ein Bestandteil einer Füllkörpersäule ist. Der Füllkörper 1 hat die Forme eines Rohres und wird auch als Raschig-Ring bezeichnet. Der Füllkörper 1 weist eine Oberfläche 2 auf, wobei die nach außen gewandet Oberfläche 2 eine Außenseite 3 und die innere Fläche einer Innenseite 4 bildet. Der Füllkörper 1 ist aus einem Polymer gebildet und wird gemäß dem erfindungsgemäßen Verfahren einer Behandlung mit einem Fluor enthaltendem Behandlungsgas ausgesetzt. Durch die Behandlung mit dem Fluor enthaltendem Behandlungsgas wird die Oberflächenspannung des Füllkörpers 1 von ursprünglich 30 bis 40 mN/m auf 50 bis 70 mN/m erhöht. Durch diese Maßnahme wird die Benetzbarkeit des Füllkörpers 1 mit einer wässrigen Lösung erhöht.

Dadurch, dass der Füllkörper 1 in einer Füllkörpersäule großflächiger mit einer wässrigen Lösung benetzt werden kann, wird die Austauschfläche zwischen einer Flüssigkeit und einem Gas in einer Füllkörpersäule erhöht und damit die Stoff- und Wärmeaustauscheigenschaften verbessert.

### Bezugszeichenliste

- 1: Füllkörper
- 2: Oberfläche
- 3: Außenseite
- 4: Innenseite

## Patentansprüche

1. Verfahren zur Behandlung mindestens eines Bestandteils (1) einer Füllkörpersäule mit einem Bereich aus Kunststoff, wobei der Bereich mit einer Bereichsoberfläche zumindest einen Teil der Oberfläche (2) des Bestandteils (1) bildet, bei dem zumindest ein Teil der Kunststoff aufweisenden Oberfläche (2) für einen Behandlungszeitraum in einer Behandlungskammer mit einem Behandlungsgas in Kontakt gebracht wird, wobei das Behandlungsgas Fluor umfasst.

2. Verfahren nach Anspruch 1, wobei die Kunststoff aufweisende Oberfläche (2) für einen Behandlungszeitrum von mindestens 3 0 s in Kontakt mit dem Behandlungsgas gebracht wird.

3. Verfahren nach Anspruch 1 oder 2, bei dem die Behandlung bei einer Temperatur durchgeführt wird, die im Bereich von 20°C bis 40°C liegt.

4. Verfahren nach Anspruch 1, 2 oder 3, wobei ein Druck in der Behandlungskammer unterhalb des Umgebungsdrucks liegt.

5. Verfahren nach einem der Ansprüche 1 bis 4, bei dem vor Zuführung des Behandlungsgases zur Behandlungskammer, diese zumindest einmal evakuiert wird.

6. Verfahren nach Anspruch 5, wobei nach einem ersten Evakuierungsschritt die Behandlungskammer mit einem inerten Spülgas gespült und dieses vor Zuführung des Behandlungsgases durch evakuieren aus der Behandlungskammer entfernt wird.

7. Verfahren nach Anspruch 6, wobei die Behandlungskammer mit Stickstoff als Spülgas gespült wird.

8. Verfahren nach wenigstens einem der Ansprüche 1 bis 7, wobei der Bestandteil (1) ein Füllkörper ist.

9. Verfahren nach Anspruch 8, bei dem sich die Behandlung unmittelbar an einen Formgebungsprozess des Füllkörpers anschließt.

10. Verfahren nach wenigstens einem der Ansprüche 1 bis 9, wobei die Behandlung so durchgeführt wird, dass nur eine an die Oberfläche angrenzende Schicht Fluor in gebundener Form aufweist.

11. Verfahren nach einem der vorhergehenden Ansprüche, wobei das Behandlungsgas mindestens 5 Vol.-% Fluor umfasst.

12. Bestandteil (1) einer Füllkörpersäule mit einem Bereich aus Kunststoff, wobei der Bereich mit einer Bereichsoberfläche zumindest einen Teil der Oberfläche (2) des Bestandteils (1) bildet, bei dem nur die an die Bereichsoberfläche angrenzende Schicht des Kunststoffs ein Fluorpolymer mit einer polaren Oberfläche ist.

13. Bestandteil (1) nach Anspruch 12 wobei der Kunststoff ein Kunststoff der folgenden Gruppe ist:
- Polyethylen; und
- Polypropylen.

14. Bestandteil nach einem der Ansprüche 12 bis 13, wobei das Fluorpolymer ein polarmodifiziertes Fluorpolymer ist.

15. Bestandteil nach einem der Ansprüche 12 bis 14, wobei der Bestandteil (1) ein Füllkörper ist.

16. Bestandteil nach einem der Ansprüche 12 bis 15, wobei der Bestandteil (1) nach einem Verfahren nach einem der Ansprüche 1 bis 11 hergestellt ist. Hilfsantrag II

## Claims

1. A method for treating at least one component (1) of a packed column having a region made of plastic, wherein the region having a region surface forms at least a part of the surface (2) of the component (1), in which at least a part of the surface (2) comprising plastic is brought into contact with a treatment gas in a treatment chamber for a treatment period, wherein the treatment gas comprises fluorine.

2. The method according to claim 1, wherein the surface (2) comprising plastic is brought into contact with the treatment gas for a treatment period of at least 30 seconds.

3. The method according to claim 1 or 2, wherein the treatment is carried out at a temperature in the range from 20°C to 40°C.

4. The method according to claim 1, 2 or 3, wherein a pressure in the treatment chamber is below the ambient pressure.

5. The method according to one of claims 1 to 4, wherein, before the treatment gas is delivered to the treatment chamber, the treatment chamber is evacuated at least once.

6. The method according to claim 5, wherein after a first evacuation step the treatment chamber is flushed with an inert flushing gas and this flushing gas is removed from the treatment chamber by evacuation before the delivery of the treatment gas.

7. The method according to claim 6, wherein the treatment chamber is flushed with nitrogen as flushing gas.

8. The method according to one of claims 1 to 7, wherein the component (1) is a packing.

9. The method according to claim 8, wherein the treatment directly follows a process of shaping the packing.

10. The method according to at least one of claims 1 to 9, wherein the treatment is carried out so that only one layer adjoining the surface includes fluorine in bound form.

11. The method according to one of the preceding claims, wherein the treatment gas comprises at least 5 vol.% fluorine.

12. A component (1) of a packed column having a region made of plastic, wherein the region having a region surface forms at least a part of the surface (2) of the component (1), in which only the layer of plastic adjoining the region surface is a fluoropolymer having a polar surface.

13. The component (1) according to claim 12, wherein the plastic is a plastic from the following group:
- polyethylene; and
- polypropylene.

14. The component according to one of claims 12 to 13, wherein the fluoropolymer is a polar-modified fluoropolymer.

15. The component according to one of claims 12 to 14, wherein the component (1) is a packing.

16. The component according to one of claims 12 to 15, wherein the component (1) is produced by a method according to one of claims 1 to 11.

## Revendications

1. Procédé de traitement d'au moins un composant (1) d'une colonne à garnissage avec une zone en plastique, dans lequel la zone avec une surface de zone forme au moins une partie de la surface (2) du composant (1), pour lequel au moins une partie de la surface (2) possédant du plastique est mise en contact dans une chambre de traitement avec un gaz traitant pour une durée de traitement, dans lequel le gaz traitant comprend le fluor.

2. Procédé selon la revendication 1, dans lequel la surface (2) possédant du plastique est mise en contact avec le gaz traitant pour une durée de traitement d'au moins 30 secondes.

3. Procédé selon la revendication 1 ou 2, pour lequel le traitement est effectué à une température comprise dans une plage allant de 20 °C à 40 °C.

4. Procédé selon la revendication 1, 2 ou 3, dans lequel une pression dans la chambre de traitement est inférieure à la pression environnante.

5. Procédé selon l'une quelconque des revendications 1 à 4, pour lequel la chambre de traitement est vidée au moins une fois avant d'être alimentée en gaz de traitement.

6. Procédé selon la revendication 5, dans lequel la chambre de traitement est nettoyée avec un gaz de purge inerte après la première phase de vidage et celui-ci est retiré par vidage hors de la chambre de traitement avant l'alimentation en gaz traitant.

7. Procédé selon la revendication 6, dans lequel la chambre de traitement est nettoyée avec un gaz de purge qui est l'azote.

8. Procédé selon au moins une quelconque des revendications 1 à 7, dans lequel le composant (1) est un matériau de remplissage.

9. Procédé selon la revendication 8, pour lequel le traitement succède immédiatement à un processus de façonnage du matériau de remplissage.

10. Procédé selon au moins une quelconque des revendications 1 à 9, dans lequel le traitement est effectué de telle sorte que seule une couche limitrophe de la surface possède du fluor sous forme liée.

11. Procédé selon l'une quelconque des revendications précédentes, dans lequel le gaz traitant comprend au moins 5 % en volume de fluor.

12. Composant (1) d'une colonne à garnissage avec une zone en plastique, dans lequel la zone avec une surface de zone forme au moins une partie de la surface (2) du composant (1), pour lequel seule la couche de plastique limitrophe de la surface de la zone est un polymère de fluor avec une surface polaire.

13. Composant (1) selon la revendication 12, dans lequel le plastique est un plastique du groupe suivant :
- polyéthylène ; et
- polypropylène.

14. Composant selon l'une quelconque des revendications 12 à 13, dans lequel le polymère de fluor est un polymère de fluor modifié polairement.

15. Composant selon l'une quelconque des revendications 12 à 14, dans lequel le composant (1) est un matériau de remplissage.

16. Composant selon l'une quelconque des revendications 12 à 15, dans lequel le composant (1) est produit selon un procédé selon l'une quelconque des revendications 1 à 11.
